# EUROPEAN PATENT SPECIFICATION

(11) **EP 2 409 574 B1**
(45) Date of publication and mention of the grant of the patent: **09.10.2019**
(21) Application number: 11175066.7
(22) Date of filing: 22.07.2011
(51) Int. Cl.: A23C 15/02, A23C 15/12

(54) **Frying butter**
Bratbutter
Beurre pour friture

(30) Priority: 23.07.2010 NL 2005137
(43) Date of publication of application: 25.01.2012
(73) Proprietor: FrieslandCampina Nederland B.V., 3818 LE Amersfoort (NL)
(72) Inventor: Nieuwenhuijse, Johannes Andries, 7211 AR Eefde (NL); Ebbekink, Jan Herman, 7475 SJ Markelo (NL); Somers, Marco Albertus Fransiscus Johannes, 5056 MJ Berkel-Enschot (NL); van Haperen, Hendrikus Wilhelmus Maria, 4838 GP Breda (NL); Boerboom, Franciscus Johannes Gerardus, 3707 BH Zeist (NL); Meijer, Brenda Maria, 1401 SZ Bussum (NL)
(74) Representative: V.O.

(56) References cited:
- EP-A1- 1 103 467
- EP-A1- 2 052 628
- EP-A2- 0 285 198
- DE-A1- 1 922 526
- DE-A1- 2 055 036
- GB-A- 1 160 470
- US-A- 4 557 103
- US-A1- 2003 082 289
- US-A1- 2005 025 871
- Anonymous: "Whipped Butter", , Retrieved from the Internet: URL:https://www.uoguelph.ca/foodscience/bo ok/export/html/1705 [retrieved on 2018-04-16]

## Description

The present invention relates to a frying butter. It is directed to a butter comprising 4 to 20 vol% of a gas, wherein the 20 to 90 vol% of the gas is present in the fat phase. In addition, the present invention is related to a process of making such a butter by providing a butter with a viscosity between 20 Pa.s and 200 Pa.s and adding gas until 4 to 20 vol% of gas is present in the butter

### Introduction

Butter is a dairy product made by churning fresh or fermented cream or milk. Butter consists of milkfat (also referred to as butterfat), water and milk proteins and is a water in oil emulsion. The amount of milkfat in the finished product is prescribed by law. In the United States, products sold as "butter" are required to contain a minimum of 80% milkfat; in practice most American butters contain only slightly more than that, averaging around 81% milkfat. European butters are required to have at least 80% milkfat, less than 16% water, 2% of non-fat milk solids, and, optionally, salt. In butter concentrate or anhydrous milk fat practically all non-fat milk solids and water have been removed, typically leading to a fat content of 99% or higher.

Butter is liked by many people for its taste. It is generally used as a spread and a condiment, as well as in cooking applications, such as baking, sauce making, and pan frying. Due to the presence of protein and lactose, butter also imparts a well liked brown colour when heated. However care should be taken when heating the butter, as the butter will become burnt quickly. The time between having a nice brown colour and good flavour and burnt butter with an unsightly black colour and black residue is short. Butter for frying purposes is usually sold in wrappers.

It is therefore an object of the invention is to improve browning properties of butter. It is another object of the present invention to provide a process that improves the browning properties of butter. It is another object of the present invention to provide a butter with improved browning properties that may still be sold as butter. Another object of the invention is to provide a butter that can be filled in a wrapper.

There are different types of butter. Homemade or farmer's butter is made by a traditional churning process of milk. The churning results in incorporation of about 2 vol% of air. The air is incorporated into the water phase of the butter. For industrial butter, cream including the milk fat is separated from the milk by a cream separator, e.g. by centrifugal forces, the cream is then churned by an industrial churner or mixer. Often a vacuum step is employed to be sure that no air is incorporated into the butter. The vacuum step has advantages as without the vacuum step the structure of the butter is layered, it reduces the risk of oxidation and rancidity and it provides better bacteriological properties.

Butter is hard at refrigeration temperatures and softens at room temperature. Whipped butter is used in restaurants because is it much softer than normal butter, making it easier to spread, even at refrigerator temperatures. Whipped butter is made by whipping soft butter with some milk or water until it is fluffy. Usually the incorporation of air increases the volume of the butter by more than 30%. The drawback of whipped butter is that the butter is too soft at room temperature, especially in order for it to be handled on an industrial scale.

In margarine making, air may be included for various reasons, usually to soften the texture or to increase the volume. Often more than 30 vol% of air or an inert gas is incorporated. The gas is introduced into the water phase before the start of the crystallisation process, as incorporation of gas after the crystallisation of the margarine disrupts the fat network of the margarine and gives rise to brittleness and torn structures even at low amounts of gas such as 0.1 vol% (see Controlling the texture of spreads, A. Bot, et al, pp. 350-372 in McKenna, B., Texture in food, Volume 1: Semi-solid Foods, RC Press, Cambridge UK (2003)).

US2005/025871 discloses a spreadable butter product wherein a butter is heated and aerated. The butter is heated to a temperature from about 40°F (4°C) to about 80-85°F (=27-29°C) so that it is softened into a viscous state. After the heating the butter is aerated, e.g. by a mixer. At least 3%, 5% or 10% of air is incorporated. No indication of the viscosity is disclosed.

US4557103 discloses a butter-like product wherein the viscosity is adjusted to 16000 to 18000 cP at 75°F, which is 16 to 18 Pa.s (1cP=1mPa.s). The viscosity adjusted butter is aerated. US4557103 does not disclose anything about the amount of gas to be incorporated.

Surprisingly in the present invention it was found that when a small amount of gas is introduced into the butter, i.e. less than 30 vol%, when the butter has a viscosity between 20 Pa.s and 200 Pa.s, a certain amount of the gas is incorporated into the fat phase. This introduction of gas into the fat phase gives the butter better browning and baking properties compared to conventional butter. The butter has better spattering values and browns more evenly than conventional butter. In addition, it takes much longer before blackening of butter occurs and a black residue appears.

### Detailed description

The present invention relates in a first aspect to a frying butter comprising 60 to 95 wt% of fat and 4 to 20 vol% of gas, wherein 20 to 90 % of the gas is present in the fat phase.

It should be noted that butter is restricted by rules in order to be sold as butter, unlike margarine. Often when the process or recipe of the butter is altered it may not be sold as butter anymore. Therefore a skilled person would not easily change the processing conditions of butter making.

In addition, as a skilled person is aware of the softening effect of whipped butter and the disruption of the crystallised fat network by the introduction of gas into the fat phase, he would not readily include gas into an already crystallised butter, especially not in the fat phase.

It was surprisingly found that when less than 30 vol% of gas was incorporated the butter exhibited unexpected good frying properties. The butter does not burn as easily as conventional butter without gas, thus the browning properties of the butter are improved. In addition, less black residue is formed after a certain amount of time. It was also found that the spattering behaviour is improved compared to conventional butter without gas incorporated. It was seen that the butter of present invention had a much desired brown colour while conventional butter already had some black residue.

For the purpose of the present invention, the amount of gas is indicated in volume %. For the butter of the present invention this means that 4 to 20 % of the volume of the butter is gas, while 96 to 80% of the volume of the butter are the other components of the butter, such as the water-phase and fat-phase. The amount of fat is indicated in wt%. The part of the gas that is indicated to be present in the fat phase is the percentage of gas compared to the whole amount of gas present in the butter. Thus 20-90% of gas in the fat phase entails that 80% to 10% of the gas is present in the water phase.

It should be noted that in the prior art when gas is incorporated into butter or margarine this is usually done in the water-phase, i.e. 100% of the gas is present in the water phase. This is because it is known to a skilled person that already a small amount of gas present in the fat-phase, especially introduced after the crystallization, severely disrupts the structure of the emulsion (see Controlling the texture of spreads, A. Bot, et al, pp. 350-372 in McKenna, B., Texture in food, Volume 1: Semi-solid Foods, RC Press, Cambridge UK (2003)).

The butter of the present invention preferably contains a fat phase that consists of 100% of milkfat. However, also butter mélanges are envisioned in the present invention and the fat phase of the butter may therefore contain 15 to 100wt% milk fat. The other fat may be vegetable oils, such as oil from linseed, sunflower, safflower, olive, soybean, corn, palm, coconut, evening primrose, peanut, walnut, sesame, or even fish oil, algae oil or fat from animals such as bovine, goat, etc. Preferably the other oil is selected from the group consisting of oil from linseed, sunflower, safflour, olive, soybean, corn, palm, coconut, evening primrose, peanut, walnut, fish, and algae oil The butter according to the present invention comprises gas. Preferably the gas is selected from the group comprising air, nitrogen, helium, carbon dioxide, nitrous oxide, and argon. Preferably the gas is an inert gas. Most preferred gasses are air, nitrogen and helium.

The butter according to the present invention may comprise salt from 0.1 to 5 wt%, more preferably from 0.25 to 2.5 wt% salt, and most preferably from 0.5 to 1.5 wt% salt. Preferred salt are edible salts. Suitable salts are selected from the group comprising, sodium salt, potassium salts, ammonium salts, magnesium salts, and iron salts. Preferred salts are sodium salts and potassium salts and iron salts. Suitable salts are selected from the group comprising sodium chloride, sodium glutamate, potassium chloride, iron sulphate, ammonium chloride. Preferably the butter of the present invention comprises 0.05 tot 1 wt% sodium, more preferably 0.1 to 0.5 wt% and most preferably between 0.2 and 0.3 wt% sodium.

In a preferred embodiment, the butter of the present invention comprises 70 to 90 wt% fat, more preferably 75 to 85 and most preferably about 80 wt% of fat.

In yet another preferred embodiment, 30 tot 70 vol% of the gas is present in the fat phase, more preferably 40 to 60 vol%. In even another preferred embodiment, the butter comprises 6 to 20 vol%, and most preferably 8 to 15 vol% of gas.

Another aspect of the present invention is related to a process to produce a frying butter, comprising the following steps:
Provide a butter with a viscosity between 20Pa.s and 200 Pa.s
Add gas until the butter comprises 4 to 20 vol% gas.

It was surprisingly found that when the butter had a viscosity lower than 200 Pa.s up to about 30 vol% of gas could be incorporated into butter, without the butter becoming too soft. In addition, it was found that the gas was not only incorporated into the water phase but at least a part was also incorporated into the fat phase. This butter showed unexpected frying characteristics especially in terms of browning properties but also in spattering behaviour.

The viscosity of the butter should be between 20 Pa.s and 200 Pa.s, which is a comparable to the viscosity of peanut butter. The viscosity is of course dependent on the amount and type of fat in the butter and the temperature of the butter. In a suitable embodiment the gas is introduced into the butter by a mixer. Suitably the mixer is a part of a continuous butter line. Preferably, the mixer has a velocity of between 500 and 20000 rpm, more preferably between 1000 and 15000 rpm, most preferably between 5000 and 10000 rpm. Of course the mixing velocity depends on the viscosity of the butter, the amount of butter, and the mixer itself. The important feature is that about 4 to 20 vol% of air or gas is introduced into the butter. A skilled person will be able to adjust the mixing speed accordingly. Preferably the butter has a viscosity between 30 and 180 Pa.s, when the gas is introduced into the butter, more preferably, between 50 and 150 Pa.s, even more preferably between 80 and 120 Pa.s and most preferably between 90 and 110 Pa.s.

In a suitable embodiment, the butter comprises 60 to 95 wt% fat, more suitably 75 to 90 wt% of fat, most suitably about 80 to 85 wt%.

The difference between the present invention and much of the prior art incorporating gas into butter and especially margarine is that the fat of the butter of the present invention has already, at least partly crystallized, before gas is added. The gas may thus be introduced during the crystallization process, before the butter is completely crystallized and the viscosity is between 20 Pa.s and 200 Pa.s. However, already crystallized butter may be brought to a viscosity between 20 Pa.s and 200 Pa.s, e.g. by increasing the temperature and gas may be introduced after the viscosity has dropped to between 20 Pa.s and 200 Pa.s., e.g. in rework.

It should be noted that butter for frying purposes is usually sold in wrappers. To be able to be filled in wrappers the butter should be sufficiently firm and not to too warm otherwise it is not possible to fill the wrapper with butter. In principle, butter may be heated first to have a desired viscosity and cooled later to be firm enough to be filled in a wrapper. However it is found that when the butter is heated too much and later cooled the rheology of the butter becomes brittle, and pieces of the butter easily break off.. The consumer finds brittle butter not appealing and associates it with a butter that has gone bad. Therefore preferably the butter has a smooth, good spreadable rheology. In a preferred embodiment the butter is heated to a temperature and viscosity that is enough to incorporate gas into the fat-phase but low enough to have a certain stiffness to be able to fill the butter into a wrapper without the need to cool the butter first. Preferably the butter has a viscosity of at least 20 Pa.s when gas is incorporated into the butter, more preferably at least 30 Pa.s, more preferably 40 Pa.s, more preferably 50 Pa.s. Commercially it is not attractive to heat the butter first and then cool it later for several reasons. Both heating and cooling requires energy and time, with more energy and time being unfavourable for commercial and environmental reasons. Preferably in the butter making process heating and cooling is minimized. In addition, cooling large amounts of butter, e.g. in a butter-making line, is not easy and sometimes even impossible. If the butter is too warm, it will be too soft and cannot be packed into a wrapper but needs to be packed into a tub where it will cool further. Typically frying butters are packed in a wrapper and not in tubs. In a preferred embodiment the butter has a temperature of less than 25°C when gas is incorporated into the butter, more preferably between 10 and 25°C, more preferably between 14 and 19°C. It should be noted that butter with a temperature of between 14 and 19°C is firm enough to be packed into a wrapper. No cooling down is needed then. In a preferred embodiment, the butter is packed in a wrapper.

In the traditional churning process as, e.g., used for the production of farmer's butter, due to the churning, air is incorporated into butter before the crystallization and thus the air is incorporated into the water phase of the butter and not the fat phase. It is also known to add some air to margarine for reasons of improved mouth feel but also to reduce the calorie content. However, in these prior art cases the air is incorporated into the water phase, before the crystallization is started.

In a preferred embodiment of the present invention, the butter comprises 6 to 20 vol%, and most preferably 8 to 15 vol% of gas.

Preferably the gas is selected from the group comprising air, nitrogen, helium, carbon dioxide, nitrous oxide, and argon. Preferably the gas is an inert gas. Most preferred gasses are air, nitrogen and helium.

### Experimental section

### Preparation of the frying butter

The butter is made on a continuous churner. From the churner the butter is pumped to a tank and then to a packaging line. Just before the packaging an Inline Darmix mixer mixes nitrogen into the butter with 2500 rpm. The butter when mixed has a viscosity of 75 Pa.s. About 15 vol% of nitrogen is mixed into the butter. The process was run on a line with a capacity of 1350kg butter per hour.

### Frying tests

Three different butters were tested. The frying butter prepared as described above; a commercially available butter that has undergone the normal vacuum step; and a butter that is prepared as the commercially available butter but did not undergo the vacuum step. The pH of all three butter was 4,5 - 5,3 and was set to 4.5.

### Frying butter according to the invention:

At least 81% fat,
A maximum of 16% water,
A maximum of 2,0 % not fat dry matter and 0,6% salt
About 15% of nitrogen

### Commercially available butter (with vacuum step)

At least 82% fat
A maximum of 16% water
A maximum of 2,0 % not fat dry matter and 0,6% salt
No air as a vacuum step is employed

### Not-vacuumed butter

At least 81% fat,
A maximum of 16% water,
A maximum of 2,0 % not fat dry matter and 1% salt
No vacuum step was employed. It is thought that less then 2 vol% of air is incorporated, and most likely in the water phase.

### Frying tests

### Spattering

A stainless steel pan is used. The pan is placed on an induction plate, and a spattering scoring card is placed on the left hand site of the pan. 25 (± 0,1) gram of butter is weighed. The induction plate is turned on to obtain a temperature of 140°C. The butter is added and the pan is moved for 1 minute so that the butter spreads over the surface of the pan. After 2.5 minutes the pan is removed from the induction plate and the spattering is assessed.

The frying butter showed almost no spattering, with only 1-2 spots on the spattering scoring card. The commercially available butter showed sever spattering with a lot of spots on the spattering scoring card, about 50% of the scoring card was covered in spots. The non-vacuumed butter also showed some spattering, with many spots but less than the commercially available butter, about 10% of the scoring card was covered with spots.

The difference in spattering is dramatic; the frying butter according to the invention shows almost no spattering while the commercially available butter shows severe spattering and the non-vacuumed butter shows moderate spatter. It should be noted that the non-vacuumed butter had a layered structure which is undesirable for commercial reasons.

### Browning

A Thermolon pan is used and the frying butter of the invention and the commercially available butter was tested. The pan is placed on an induction plate. 25 (± 0,1) gram of butter is weighed. The induction plate is turned on to obtain a temperature of 140°C. The butter is added and the pan is moved for 1 minute so that the butter spreads over the surface of the pan. After 4 minutes the pan is removed from the induction plate and the butter is allowed to cool for a few minutes before the butter is poured into a Petri dish. The Petri dish is stored at 14 °C for 20 minutes. The browning and residue forming are assessed. The frying butter of the invention shows a very nice caramel colour of the butter with no black residue formed. In contrast the commercially available butter is still yellow of colour and has many black coarse residues formed.

### Determination of amount of gas incorporated

The butter is checked for the temperature at 10°C
A metal ring is placed on the butter and forced through the butter. The ring with the butter inside is weighed. The amount of gas is calculated by dividing the weight of the butter with gas by the weight of the same butter without gas.

## Claims

1. Frying butter comprising 60 to 95 wt% fat, and 4 to 20 vol% gas wherein 20 to 90 % of the gas is present in the fat phase.

2. Frying butter according to claim 1 wherein 15-100 wt% of the fat is milk fat.

3. Frying butter according to claim 1 or 2 wherein the gas is an inert gas.

4. Frying butter according to any of the previous claims wherein the gas is selected from the group consisting of air, nitrogen, helium, carbon dioxide, nitrous oxide, argon.

5. Frying butter according to any of the previous claims comprising 0.1 to 5 wt% salt.

6. Frying butter according to any of the previous claims comprising 70 to 90 wt% fat.

7. Frying butter according to any of the previous claims wherein 25 to 60% of the gas is present in the fat phase.

8. Frying butter according to any of the previous claims comprising 6 to 20 vol% gas.

9. Process to produce frying butter, comprising the following steps
Provide butter with a viscosity between 20 Pa.s and 200 Pa.s, preferably between 30 Pa.s and 180 Pa.s
Add gas until the butter comprises 4 to 20 vol% gas.

10. Process according to claim 9 wherein the gas is added with a mixer.

11. Process according to claim 9 or 10 wherein the butter comprises 60 to 95 wt% fat.

12. Process according to any of claim 9 to 11 wherein the fat of the butter is at least partially crystallised before the gas is added.

13. Process according to any of claim 9 to 12 wherein the gas is an inert gas, preferably selected from the group consisting of air, nitrogen, helium carbon dioxide, nitrous oxide, argon.

14. Process according to claim 10 wherein the mixer has a speed between 500 and 20000 rpm.

15. Process according to any of claims 9 to 14 wherein the butter has a temperature of less than 25°C.

## Patentansprüche

1. Bratbutter, umfassend 60 bis 95 Gew.-% Fett und 4 bis 20 Vol.-% Gas, wobei 20 bis 90 % des Gases in der Fettphase vorhanden sind.

2. Bratbutter nach Anspruch 1, wobei 15 bis 100 Gew.-% des Fettes Milchfett sind.

3. Bratbutter nach Anspruch 1 oder 2, wobei das Gas ein Inertgas ist.

4. Bratbutter nach einem der vorhergehenden Ansprüche, wobei das Gas aus der Gruppe ausgewählt ist, bestehend aus Luft, Stickstoff, Helium, Kohlendioxid, Distickstoffoxid, Argon.

5. Bratbutter nach einem der vorhergehenden Ansprüche, umfassend 0,1 bis 5 Gew.-% Salz.

6. Bratbutter nach einem der vorhergehenden Ansprüche, umfassend 70 bis 90 Gew.-% Fett.

7. Bratbutter nach einem der vorhergehenden Ansprüche, wobei 25 bis 60 % des Gases in der Fettphase vorhanden sind.

8. Bratbutter nach einem der vorhergehenden Ansprüche, umfassend 6 bis 20 Vol.-% Gas.

9. Verfahren zur Herstellung von Bratbutter, umfassend die folgenden Schritte
Verleihen der Butter einer Viskosität zwischen 20 Pa.s und 200 Pa.s, vorzugsweise zwischen 30 Pa.s und 180 Pa.s
Zugabe von Gas, bis die Butter 4 bis 20 Vol.-% Gas enthält.

10. Verfahren nach Anspruch 9, wobei das Gas mit einem Mischer zugegeben wird.

11. Verfahren nach Anspruch 9 oder 10, wobei die Butter 60 bis 95 Gew.-% Fett umfasst.

12. Verfahren nach einem der Ansprüche 9 bis 11, wobei das Fett der Butter wenigstens teilweise kristallisiert wird, bevor das Gas zugegeben wird.

13. Verfahren nach einem der Ansprüche 9 bis 12, wobei das Gas ein Inertgas ist, vorzugsweise ausgewählt aus der Gruppe bestehend aus Luft, Stickstoff, Helium, Kohlendioxid, Distickstoffoxid, Argon.

14. Verfahren nach Anspruch 10, wobei der Mischer eine Drehzahl zwischen 500 und 20000 U/min hat.

15. Verfahren nach einem der Ansprüche 9 bis 14, wobei die Butter eine Temperatur von weniger als 25 °C hat.

## Revendications

1. Beurre pour friture comprenant 60 à 95 % en poids de matière grasse, et 4 à 20 % en volume de gaz, dans lequel 20 à 90 % du gaz sont présents dans la phase grasse.

2. Beurre pour friture selon la revendication 1, dans lequel 15 à 100 % en poids de la matière grasse sont constitués de matière grasse du lait.

3. Beurre pour friture selon la revendication 1 ou 2, dans lequel le gaz est un gaz inerte.

4. Beurre pour friture selon l'une quelconque des revendications précédentes, dans lequel le gaz est choisi dans le groupe constitué par l'air, l'azote, l'hélium, le dioxyde de carbone, l'oxyde nitreux, l'argon.

5. Beurre pour friture selon l'une quelconque des revendications précédentes, comprenant 0,1 à 5 % en poids de sel.

6. Beurre pour friture selon l'une quelconque des revendications précédentes, comprenant 70 à 90 % en poids de matière grasse.

7. Beurre pour friture selon l'une quelconque des revendications précédentes, dans lequel 25 à 60 % du gaz sont présents dans la phase grasse.

8. Beurre pour friture selon l'une quelconque des revendications précédentes, comprenant 6 à 20 % en volume de gaz.

9. Procédé pour produire un beurre pour friture, comprenant les étapes suivantes :
obtention d'un beurre ayant une viscosité comprise entre 20 Pa.s et 200 Pa.s, de préférence entre 30 Pa.s et 180 Pa.s,
addition de gaz jusqu'à ce que le beurre comprenne 4 à 20 % en volume de gaz.

10. Procédé selon la revendication 9, dans lequel le gaz est ajouté au moyen d'un mélangeur.

11. Procédé selon la revendication 9 ou 10, dans lequel le beurre comprend 60 à 95 % en poids de matière grasse.

12. Procédé selon l'une quelconque des revendications 9 à 11, dans lequel la matière grasse du beurre est au moins partiellement cristallisée avant l'addition du gaz.

13. Procédé selon l'une quelconque des revendications 9 à 12, dans lequel le gaz est un gaz inerte, de préférence choisi dans le groupe constitué par l'air, l'azote, l'hélium, le dioxyde de carbone, l'oxyde nitreux, l'argon.

14. Procédé selon la revendication 10, dans lequel le mélangeur a une vitesse comprise entre 500 et 20 000 t/min.

15. Procédé selon l'une quelconque des revendications 9 à 14, dans lequel le beurre a une température inférieure à 25°C.
